# EUROPEAN PATENT APPLICATION

(11) **EP 3 901 881 A1**
(43) Date of publication of application: **27.10.2021**
(21) Application number: 19900833.5
(22) Date of filing: 13.12.2019
(51) Int. Cl.: G06Q 30/00, G10L 15/00, G10L 15/10, G10L 25/63

(54) **INFORMATION PROCESSING TERMINAL, INFORMATION PROCESSING APPARATUS, AND INFORMATION PROCESSING METHOD**

(30) Priority: 20.12.2018 JP 2018238780
(71) Applicant: Sony Group Corporation, 108-0075 Tokyo (JP)
(72) Inventor: TSUNOO, Emiru, Tokyo 108-0075 (JP); OGAWA, Hiroaki, Tokyo 108-0075 (JP); KAMADA, Chie, Tokyo 108-0075 (JP); TAKAHASHI, Akira, Tokyo 108-0075 (JP); TOTSUKA, Noriko, Tokyo 108-0075 (JP); TATEISHI, Kazuya, Tokyo 108-0075 (JP); KOYAMA, Yuichiro, Tokyo 108-0075 (JP); TAKEDA, Yuki, Tokyo 108-0075 (JP); MAEDA, Yoshinori, Tokyo 108-0075 (JP); WATANABE, Hideaki, Tokyo 108-0075 (JP); FUKUI, Akira, Tokyo 108-0075 (JP); KURODA, Kan, Tokyo 108-0075 (JP)
(74) Representative: 2SPL Patentanwälte PartG mbB
(86) International application number: PCT/JP2019/049063
(87) International publication number: WO 2020/129865

(57) **Abstract**

An information processing terminal according to the present disclosure includes a control unit (100) that performs a process of transmitting inquiry information on a specific device to a server on the basis of a spoken content of a user or a state of the specific device that is voluntarily collected, a process of outputting answer information when receiving, from the server, the answer information based on an answer database in which answer information prepared in advance is registered, and a process of making an inquiry to an operator with respect to the inquiry information if the answer information is not detected in the server.

## Description

### Field

The present disclosure relates to an information processing terminal, an information processing apparatus, and an information processing method.

### Background

Conventionally, when a defect occurs in a product, such as a home electrical appliance, that is used on a daily basis, it is often the case that a user voluntarily accesses the Internet and solves a problem by referring to answers (frequently asked questions (FAQ) or the like) that are prepared in advance.

Further, in Patent Literature 1 listed below, a dialogue system that is able to search for an answer to an inquiry from a user while the user is making a dialogue with the system is proposed.

### Citation List

### Patent Literature

Patent Literature 1: International Publication No. 2017/208518

### Summary

### Technical Problem

However, in the conventional technology, a user needs to recognize a defect by him/herself and needs to search for FAQs published on a product homepage or the like by a smartphone, a personal computer (PC), or the like, so that a time and effort for search operation is a burden for the user. Furthermore, when a solution is to be obtained through a dialogue with the system, it is necessary to prepare answers in advance to cope with inquires, but it is difficult to cope with all of inquiries, and, in general, it is assumed to prepare answers on products on which dialogue agents are mounted and it is difficult to cope with products made by other manufacturers or the like.

### Solution to Problem

According to the present disclosure, an information processing terminal is provided that includes: a control unit that performs a process of transmitting inquiry information on a specific device to a server on the basis of one of a spoken content of a user and a state of the specific device that is voluntarily collected, a process of outputting answer information when receiving, from the server, the answer information that is based on an answer database in which answer information prepared in advance is registered, and a process of making an inquiry about the inquiry information to an operator if the answer information is not detected in the server.

According to the present disclosure, an information processing apparatus is provided that includes: an answer database in which answer information prepared in advance is registered; a contact information database in which contact information is registered; and a control unit that performs a process of searching for answer information from the answer database on the basis of inquiry information that is transmitted from an information processing terminal, that is about a specific device, and that is based on one of a spoken content of a user and a state of the specific device that is voluntarily collected, transmitting retrieved answer information to the information processing terminal, and making an inquiry to an operator by referring to the contact information database with respect to the inquiry information if corresponding answer information is absent.

According to the present disclosure, an information processing method implemented by a processor is provided, the information processing method including: transmitting inquiry information on a specific device to a server on the basis of one of a spoken content of a user and a state of the specific device that is voluntarily collected; outputting answer information when receiving, from the server, the answer information that is based on an answer database in which answer information prepared in advance is registered; and making an inquiry about the inquiry information to an operator if the answer information is not detected in the server.

According to the present disclosure, an information processing method implemented by a processor is provided, the information processing method including: searching for answer information from answer data base in which answer information prepared in advance is registered, on the basis of inquiry information that is transmitted from an information processing terminal, that is about a specific device, and that is based on one of a spoken content of a user and a state of the specific device that is voluntarily collected; transmitting retrieved answer information to the information processing terminal; and making an inquiry to an operator by referring to a contact information database in which contact information is registered, with respect to the inquiry if corresponding answer information is absent.

### Brief Description of Drawings

FIG. 1 is a diagram for explaining an overview of a cooking system according to one embodiment of the present disclosure.
FIG. 2 is a block diagram illustrating an example of a configuration of an agent terminal according to the present embodiment.
FIG. 3 is a block diagram illustrating an example of a configuration of an answering server according to the present embodiment.
FIG. 4 is a diagram illustrating an example of output of a response by an agent with respect to an inquiry about a device according to the present embodiment.
FIG. 5 is a diagram illustrating an example of output of a response by the agent with respect to an inquiry about a device according to the present embodiment.
FIG. 6 is a flowchart illustrating an example of a flow of a first operation process of an information processing system according to the present embodiment.
FIG. 7 is a flowchart illustrating an example of a flow of a second operation process of the information processing system according to the present embodiment.
FIG. 8 is a flowchart illustrating an example of a flow of a third operation process of the information processing system according to the present embodiment.
FIG. 9 is a flowchart illustrating an example of a flow of a fourth operation process of the information processing system according to the present embodiment.
FIG. 10 is a flowchart illustrating an example of a flow of a fifth operation process of the information processing system according to the present embodiment.
FIG. 11 is a flowchart illustrating an example of a flow of a sixth operation process of the information processing system according to the present embodiment.
FIG. 12 is a flowchart illustrating an example of a flow of a seventh operation process of the information processing system according to the present embodiment.
FIG. 13 is a flowchart illustrating an example of a flow of an eighth operation process of the information processing system according to the present embodiment.
FIG. 14 is a flowchart illustrating a subsequent flow of the operation process illustrated in FIG. 13.
FIG. 15 is a flowchart illustrating an example of a flow of a ninth operation process of the information processing system according to the present embodiment.
FIG. 16 is a flowchart illustrating an example of a flow of a tenth operation process of the information processing system according to the present embodiment.
FIG. 17 is a diagram illustrating a configuration example of a client-server type system as a system configuration example according to one embodiment of the present disclosure.
FIG. 18 is a diagram for explaining a distributed system as a system configuration example according to one embodiment of the present disclosure.
FIG. 19 is a diagram illustrating an example of a system including an intermediate server as a system configuration example according to one embodiment of the present disclosure.
FIG. 20 is a diagram for explaining a system including a terminal device that functions as a host as a system configuration example according to one embodiment of the present disclosure.

### Description of Embodiments

Preferred embodiments of the present disclosure will be described in detail below with reference to the accompanying drawings. In the present specification and the drawings, structural elements having substantially the same functions and configurations are denoted by the same reference symbols, and repeated explanation will be omitted.

In addition, hereinafter, explanation will be given in the following order.
1. Overview of information processing system according to one embodiment of present disclosure
2. Configuration example
   2-1. Configuration example of agent terminal
   2-2. Configuration example of answering server
3. Example of output of response by agent
4. Operation process
   4-1. First operation process: problem with agent terminal 10 is solved by itself
   4-2. Second operation process: inquiry about problem with agent terminal 10 is made to server
   4-3. Third operation process: problem with agent terminal 10 is voluntarily reported
   4-4. Fourth operation process: inquiry about problem with agent terminal 10 is voluntarily made to server
   4-5. Fifth operation process: agent terminal 10 solves problem with different device 11
   4-6. Sixth operation process: agent terminal 10 makes inquiry about problem with different device 11 to server
   4-7. Seventh operation process: agent terminal 10 recognizes problem with different device 11 and makes inquiry to server
   4-8. Eighth operation process: inquiry about problem with different device 11 is made to call center
   4-9. Ninth operation process: log information on problem is transmitted to support
   4-10. Tenth operation process: feedback on problem is given to developer
5. Modification
   5-1. Direct inquiry from agent terminal 10 to call center or the like
   5-2. System configuration example
6. Conclusion

### 1. Overview of information processing system according to one embodiment of present disclosure

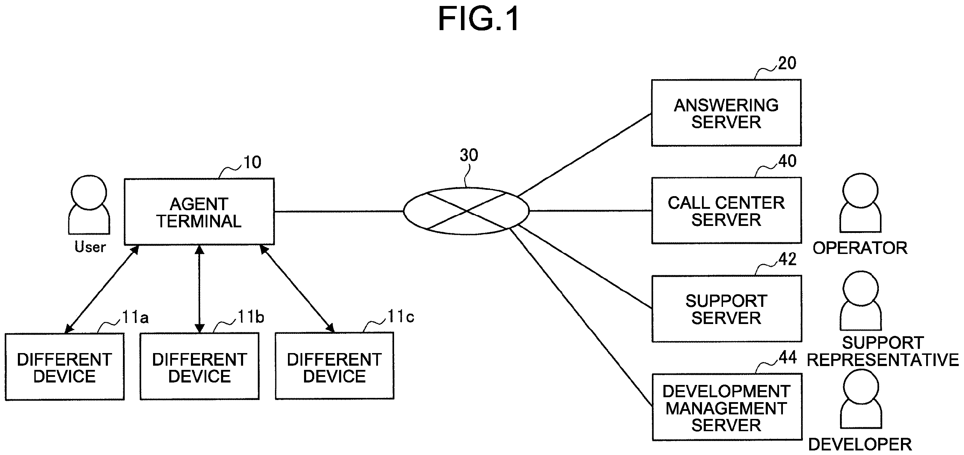

FIG. 1 is a diagram for explaining an overview of an information processing system according to one embodiment of the present disclosure. As illustrated in FIG. 1, the system includes an agent terminal 10 (information processing terminal), different devices 11, an answering server 20 (information processing apparatus), a call center server 40, a support server 42, and a development management server 44. Meanwhile, the system configuration illustrated in FIG. 1 is one example, and embodiments are not limited to this example.

The agent terminal 10 (information processing terminal) illustrated in FIG. 1 is able to perform a voice dialogue with a user, and is able to control, by voice, the agent terminal 10 itself and the different devices 11 (11a to 11c) that are communicably connected to the agent terminal 10.

The agent terminal 10 may be, for example, a dedicated smart speaker device, or may be assumed as various electronic devices, such as a television apparatus, a refrigerator, a lighting device, a personal computer (PC), a smartphone, a tablet terminal, a head mounted display (HMD), an acoustic device, or a robot, that is equipped with an agent function.

Further, the different devices 11 may be assumed as various electronic devices, such as smart speaker devices, television apparatuses, refrigerators, lighting devices, PCs, smartphones, tablet terminals, HMDs, acoustic devices, or robots.

Here, in general, it is convenient to control a different terminal device that is connected to a certain terminal device by a voice dialogue with the certain terminal device; however, with regard to a response to an inquiry about the certain terminal device itself from a user, it is necessary to prepare answers in advance in the system and it is difficult to cope with all of inquiries. Further, if the different terminal device is a product made by a different manufacturer, even if it is possible to control the different terminal device, it is difficult to provide a response to an inquiry about the product made by the different manufacturer.

To cope with this, in the present disclosure, in an information processing terminal that performs a dialogue with a user makes, it is possible to improve a capability to cope with an inquiry about a device (including the information processing terminal itself and including different devices) and improve usability for the user.

Specifically, for example, the agent terminal 10 transmits inquiry information on a specific device to the answering server 20 via a network 30 on the basis of a spoken content of a user, and if it is possible to obtain an answer from an answer database of the answering server 20, the agent terminal 10 provides the answer (provides a reply, as a response from the agent, to the user).

In contrast, when an answer is not prepared in the answer database, and if a degree of urgency of the inquiry is high, the answering server 20 may send the inquiry to the call center server 40 and contact to an operator. Furthermore, in the case of an inquiry for which the degree of urgency is low, the answering server 20 may transmit the inquiry information to the support server 42 or the development management server 44, and accumulates the inquiry information as log information. Moreover, the agent terminal 10 may notify the user that a proxy phone call to the operator is to be made or that the content of the inquiry is conveyed to a support or a development side, in accordance with a notification from the answering server 20.

Thus, the overview of the information processing system according to one embodiment of the present disclosure has been described. Next, configuration examples of main devices included in the information processing system according to the present embodiment will be described in detail below.

### 2. Configuration example

### 2-1. Configuration example of agent terminal

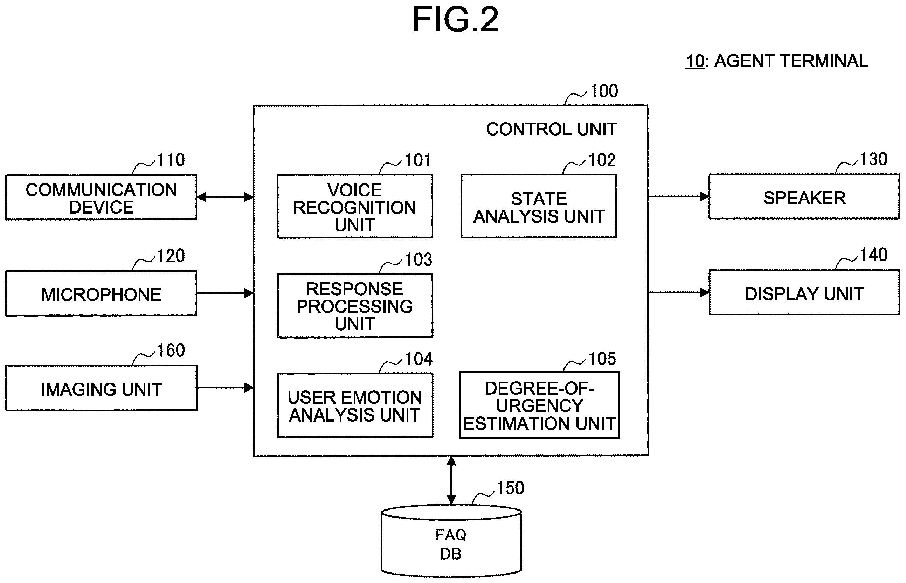

FIG. 2 is a block diagram illustrating an example of a configuration of the agent terminal 10 according to the present embodiment. As illustrated in FIG. 2, the agent terminal 10 includes a control unit 100, the different devices 11, a microphone 120, a speaker 130, a display unit 140, an FAQ database (DB) 150, and an imaging unit 160.

### Control unit 100

The control unit 100 functions as an arithmetic processing device and a control device, and controls entire operation inside the agent terminal 10 in accordance with various programs. The control unit 100 is realized by, for example, an electronic circuit, such as a central processing unit (CPU) or a microprocessor. Further, the control unit 100 may include a read only memory (ROM) that stores therein a program, a calculation parameter, and the like to be used, and a random access memory (RAM) that temporarily stores therein a parameter or the like that is changed appropriately.

Furthermore, the control unit 100 also functions as a voice recognition unit 101, a state analysis unit 102, a response processing unit 103, a user emotion analysis unit 104, and a degree-of-urgency estimation unit 105.

The voice recognition unit 101 performs voice recognition (natural language process) on a voice signal, such as a spoken voice of the user, collected by the microphone 120, and generates a character string (text data). Further, the voice recognition unit 101 may perform a semantic analysis on the character string that is generated from the spoken voice.

The state analysis unit 102 identifies a target device from the spoken content of the user recognized by the voice recognition unit 101, and analyzes a state of the target device. For example, if the agent terminal 10 is a television apparatus that has a voice dialogue function (equipped with the agent function), and if the spoken content of the user is, for example, "a screen does not work", "a terrestrial channel is not picked up", "a recorded program is not displayed", "a DVD is not displayed", "audio is unheard", or the like, the state analysis unit 102 is able to determine that the target device is the subject device (the agent terminal 10). In contrast, when the agent terminal 10 is a television apparatus that has the voice dialogue function (equipped with the agent), and if the spoken content of the user is, for example, "a light in the kitchen is not turned on", "a refrigerator is making a strange sound", "a smart speaker is unresponsive" or the like, the state analysis unit 102 determines that the target device is a different device (a lighting device in the kitchen, the refrigerator, or the speaker).

If the target device is the agent terminal 10 itself, the state analysis unit 102 analyzes an internal state. For example, if the agent terminal 10 is a television apparatus, a state of a power supply, a connection state of each of cables, a connection state with an external apparatus, a state of screen display, a screen setting, other setting states, or the like is collected.
In contrast, if the target device is the different device, and if it is possible to communicably connect to the target different device, the state analysis unit 102 requests the target different device to provide state information, and receives information indicating a state of the target different device. For example, it is assumed that a number of devices including the agent terminal 10 are connected by a home network or the like, or the agent terminal 10 is has direct communication connections. In this case, the state analysis unit 102 also receives identification information on a manufacturer, a product number, or the like from the target different device. In particular, if the product is made by the same manufacturer as the agent terminal 10 (cooperation between devices made by the same manufacturer), it may be possible to closely share product information.

Furthermore, if it is difficult to communicably connect to the different device, the state analysis unit 102 causes the imaging unit 160 to capture an image of the different device, and acquires the captured image as the state information. The state analysis unit 102 may analyze the state information (for example, a movement, a lighting state, a state of a display screen, or the like of the different device) from the captured image, or may transmit the captured image as the state information to the answering server 20 and cause the answering server 20 to analyze the state information.

Moreover, if it is determined that there is abnormality in sounds on the basis of a spoken voice of "there is a strange sound" or the like, the state analysis unit 102 may also acquire voice information collected by the microphone 120 as the state information on the target device.

The response processing unit 103 generates response information from the system (agent) to the user, and outputs the response information from the speaker 130 or the display unit 140 to the user. The response processing unit 103 may generate the response information or may acquire the response information generated by a cloud, such as the answering server 20. An algorithm of a basic response process in a dialogue system with the user using a voice agent is not specifically limited in the present embodiment, and various techniques may be applied.

Furthermore, the response processing unit 103 according to the present embodiment performs a process of acquiring answer information with respect to an inquiry about the target device on the basis of the spoken voice of the user recognized by the voice recognition unit 101 and the state of the target device analyzed by the state analysis unit 102, and providing a response from the speaker 130 or the display unit 140 to the user. "The inquiry about the target device from the user" may be an explicit inquiry made by the user, or may be an inquiry that is extracted by the response processing unit 103 from a little muttering, expression, or the like of the user. Moreover, the response processing unit 103 may detect a defect or the like of the device by regularly or irregularly causing the state analysis unit 102 to analyze the state of the device, may notify the user of the defect, and may provide answer information (solution) on a voluntary basis.

Variations of a method of acquiring the answer information will be described in detail in each of operation processes to be described later. For example, the response processing unit 103 may acquire the answer information from the FAQ DB 150 included in the agent terminal 10, or may make an inquiry to the answering server 20 and acquire the answer information from an FAQ DB 220 included in the answering server 20. Furthermore, the response processing unit 103 may make an inquiry to the answering server 20 and acquire answer information (information on a voice spoken by an operator, text data input by the operator, or the like) that the answering server 20 has obtained from the operator.

When making an inquiry to the answering server 20, the response processing unit 103 transmits inquiry information including the state information acquired by the state analysis unit 102 and the identification information (a manufacturer, a model number, or the like) on the target device to the answering server 20. Further, the response processing unit 103 may transmit, to the answering server 20, the inquiry information in which user emotion information analyzed by the user emotion analysis unit 104 is further included. Furthermore, the response processing unit 103 may transmit, to the answering server 20, the inquiry information in which a degree of urgency (or a determination result on urgency or non-urgency) estimated by the degree-of-urgency estimation unit 105 is further included.

The user emotion analysis unit 104 analyzes an emotion of the user on the basis of the voice information, the captured image, or the like. For example, expression or a movement of the user is acquired from a captured image in which the user is captured, and a state of the user, such as frustrated, angry, or upset, is analyzed. Further, information (paralanguage information), such as a pitch or a speech speed, other than verbal information is acquired from a spoken voice of the user, and a degree of angry of the user or the like is analyzed from a voice tone of the user.

The degree-of-urgency estimation unit 105 estimates the degree of urgency from a spoken voice of the user, a spoken content, expression, an analyzed emotion, or the like. For example, it is estimated that the degree of urgency is high (urgent) if the user says "please cope with it quickly", "please restore it quickly", or the like when the user speaks about a defect of the device in a dialogue with the system or if the user seems to be very angry, or depending on a state of the defect of the device (a content of an inquiry). Further, the degree-of-urgency estimation unit 105 may estimate the degree of urgency by making an inquiry of "Does it need to be restored quickly?" or the like to the user.

### Different device 110

The different device 110 is a communication module for transmitting and receiving data to and from a different device in a wired or wireless manner. The communication unit 110 performs direct communication or wireless communication via an access point with a different device by using a system, such as a wired local area network (LAN), a wireless LAN, Wireless Fidelity (Wi-Fi (registered trademark)), infrared communication, Bluetooth (registered trademark), near field/contactless communication, a mobile communication network (Long Term Evolution (LTE), or 3G (the third generation mobile communication system).

For example, the communication unit 110 may transmit and receive data to and from the different device 11 and the answering server 20.

### Microphone 120

The microphone (in the present specification, may be referred to as a mic) 120 is a device that collects surrounding sounds (including a spoken voice of the user), and outputs a voice signal that is a digital signal converted via an amplifier and an analog digital converter (ADC).

### Speaker 130

The speaker converts voice data to an analog signal via a digital analog converter (DAC) and an amplifier, and outputs (replays) the analog signal.

### Display unit 140

The display unit 140 may be, for example, a display device, such as a liquid crystal display (LCD) or an organic Electro Luminescence (EL) display. If the agent terminal 10 is a television apparatus, the display unit 140 corresponds to a television screen. Further, the display unit 140 displays response information (text or an image) provided by the agent, under the control of the response processing unit 103.

### FAQ DB 150

The FAQ DB 150 accumulates answer information that is prepared for pre-assumed inquires. Meanwhile, the answer information may include manual data of a product.

Further, while not illustrated in FIG. 2, the agent terminal 10 includes a storage unit, and the FAQ DB 150 may be stored in the storage unit. The storage unit may be implemented by a read only memory (ROM) that stores therein a program, a calculation parameter, and the like used for a process performed by the control unit 100 as described above, and a random access memory (RAM) that temporarily stores therein a parameter or the like that is changed appropriately.

### Imaging unit 160

The imaging unit 160 is an imaging device, such as an RGB camera, that includes a lens system, a driving system, and an imaging element, and that captures an image (a still image or a moving image).

Thus, the configuration of the agent terminal 10 according to the present embodiment has been described in detail above. Meanwhile, the configuration described above with reference to FIG. 2 is one example, and the functional configuration of the agent terminal 10 according to the present embodiment is not limited to this example. For example, the agent terminal 10 may be configured without including the FAQ DB 150 and the display unit 140, or the imaging unit 160 may be arranged in a different apparatus that is communicably connected to the agent terminal 10. Further, the agent terminal 10 may further include various sensors (a biological sensor for analyzing an emotion of the user, a depth camera for recognizing a movement of the user, a temperature sensor for analyzing a state of the device, a vibration sensor, an acceleration sensor, a gyro sensor, a geomagnetic sensor, an optical sensor, an illuminance sensor, or the like), and an operation input unit (a receiving unit that receives an operation input signal from a mouse, a keyboard, a touch panel, a button, a microphone, a switch, a lever, a remote controller, or the like).

Furthermore, at least a part of the functions of the control unit 100 may be implemented by a cloud.

### 2-2. Configuration example of answering server

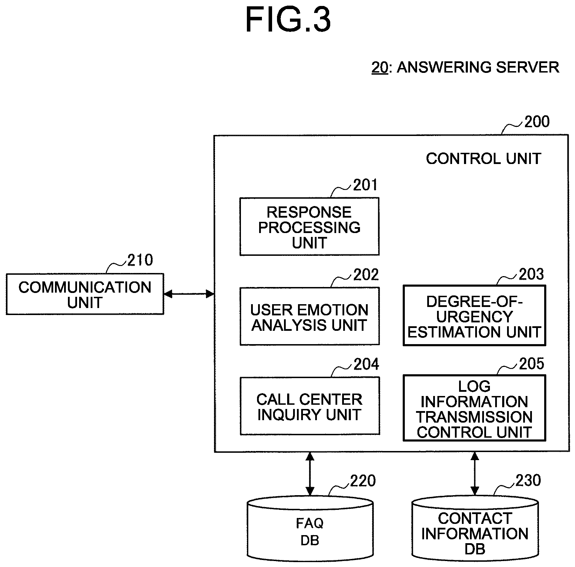

FIG. 3 is a block diagram illustrating an example of a configuration of the answering server 20 according to the present embodiment. As illustrated in FIG. 3, the answering server 20 includes a control unit 200, a communication unit 210, the FAQ DB 220, and a contact information DB 230.

### Control unit 200

The control unit 200 functions as an arithmetic processing device and a control device, and controls entire operation inside the answering server 20 in accordance with various programs. The control unit 200 is implemented by an electronic circuit, such as a central processing unit (CPU) or a microprocessor. Further, the control unit 100 may include a read only memory (ROM) that stores therein a program, a calculation parameter, or the like to be used, and a random access memory (RAM) that temporarily stores therein a parameter or the like that is changed appropriately.

Furthermore, the control unit 200 also functions as a response processing unit 201, a user emotion analysis unit 202, a degree-of-urgency estimation unit 203, a call center inquiry unit 204, and a log information transmission control unit 205.

The response processing unit 201 generates response information from the system (agent) to the user, and outputs the response information from the communication unit 210 to the agent terminal 10 via the network 30. An algorithm of a basic response process in a dialogue system with the user using a voice agent is not specifically limited in the present embodiment, and various techniques may be applied.

Furthermore, the response processing unit 201 acquires an answer to the "inquiry information about the target device" that is transmitted from the agent terminal 10, and causes the answering server 20 to return the answer information. For example, the response processing unit 201 acquires an answer from the FAQ DB 220. Moreover, if an answer is not present in the FAQ DB 220, the call center inquiry unit 204 makes an inquiry to the call center server 40 (a proxy phone call made by the agent), and acquires an answer from an operator.

The call center inquiry unit 204 acquires, from the contact information DB 230, contact information (a phone number, an e-mail address, a URL, or the like) that is used to make an inquiry about the target device, and transmits a content of the inquiry about the target device (the state information and identification information, such as a model number, on the device) to a contact destination (for example, the support server 42). The call center inquiry unit 204 may generate a voice signal (agent voice) for conveying the content of the inquiry about the target device to the operator, perform a voice conversation with the operator (a proxy phone call made by the agent), and obtain an answer (a voice answer, a text data answer, or the like) from the operator. If the operator is able to cope with the inquiry on his/her own, the operator provides an answer by a voice conversation or transmits text data to the answering server 20 by typing on an operator terminal. Further, it is assumed that the operator may request a support (a representative who supports repair of a product or the like) for a solution. In this case, the support representative may directly make a phone call to the user or may visit the user for repair.

It may be possible to cause the call center inquiry unit 204 to make an inquiry to the call center only when the degree of urgency of the inquiry is estimated to be high (that is, urgent). The degree of urgency of the inquiry may be estimated by the degree-of-urgency estimation unit 203, or the degree-of-urgency information that is estimated by the degree-of-urgency estimation unit 105 of the agent terminal 10 may be included in and transmitted with the inquiry information.

Functions of the user emotion analysis unit 202 and the degree-of-urgency estimation unit 203 are the same as the functions of the user emotion analysis unit 104 and the degree-of-urgency estimation unit 105 described above with reference to FIG. 2. The process of analyzing an emotion of the user and the process of estimating the degree of urgency may be performed by the agent terminal 10 or the answering server 20.

The log information transmission control unit 205 performs control such that the inquiry information is transmitted, as log information (on the target device), to the support server 42 or the development management server 44. For example, if it is estimated that the degree of urgency is high (that is, urgent), the log information transmission control unit 205 may transmit the inquiry information (the identification information and the state information on the target device, the user emotion information, or the like) as the log information to the support server 42. The support server 42 accumulates the acquired the log information, gives a notice to a dedicated communication terminal of the support representative, and makes a request to handle repairs (home-visit repair, making a phone call, or the like), for example.

Alternatively, if it is estimated that the degree of urgency is low (that is, not urgent), the log information transmission control unit 205 may transmit the inquiry information (the identification information and the state information on the target device, the user emotion information, or the like) as the log information to the support server 42 or the development management server 44. The content of the inquiry includes a complaint, such as "a color of a program listing is hard to see" or "an operation method is hard to understand", and the degree of urgency of such a complaint is low; therefore, by accumulating the complaint as the log information in the development management server 44 and sharing the complaint with developers, the complaint may be taken into account at the time of future product development, update of software installed in the target device, or the like. Furthermore, an emotion of the user is also transmitted as the log information, so that it is possible to analyze an impact of the problem on the user and use the analysis for future development.

### Communication unit 210

The communication unit 210 is a communication module for transmitting and receiving data to and from a different device in a wired or wireless manner. The communication unit 210 performs direct communication or wireless communication via an access point with a different device by using a system, such as a wired local area network (LAN), a wireless LAN, Wireless Fidelity (Wi-Fi (registered trademark)), infrared communication, Bluetooth (registered trademark), near field/contactless communication, a mobile communication network (Long Term Evolution (LTE), or 3G (the third generation mobile communication system).

For example, the communication unit 210 may transmit and receive data to and from the agent terminal 10.

### FAQ DB 220

The FAQ DB 220 accumulates answer information that is prepared for pre-assumed inquires. Meanwhile, the answer information may include manual data of a product. A volume of the answer information in the FAQ DB 220 included in the answering server 20 may be larger than that of the answer information accumulated in the FAQ DB 150 included in the agent terminal 10 for example, and the answer information may be the latest answer information (appropriately updated). Furthermore, the answer information accumulated in the FAQ DB 220 may be answer information that is prepared for assumed inquires related to the agent terminal 10, or answer information that is prepared for a product of a person who provides the subject system or a manufacturer of the agent terminal 10 (it can be assumed that it is easy to assume inquiries and prepare answers (solutions or the like) in advance.

### Contact information DB 230

The contact information DB 230 accumulates contact information on each of manufacturers and products. Examples of the contact information include a phone number of the call center, an e-mail address of the support representative or the developer, and a URL of each of the servers (the call center server 40, the support server 42, and the development management server 44).

Furthermore, while not illustrated in FIG. 3, the answering server 20 includes a storage unit, and the FAQ DB 220 and the contact information DB 230 may be stored in the storage unit. The storage unit may be implemented by a read only memory (ROM) that stores therein a program, a calculation parameter, and the like used for a process performed by the control unit 200 as described above, and a random access memory (RAM) that temporarily stores therein a parameter or the like that is changed appropriately.

Thus, the configuration of the answering server 20 according to the present embodiment has been described in detail above. Meanwhile, the configuration described above with reference to FIG. 3 is one example, and the functional configuration of the answering server 20 according to the present embodiment is not limited to this example. For example, the answering server 20 may be configured with a plurality of devices.

### 3. Example of output of response by the agent

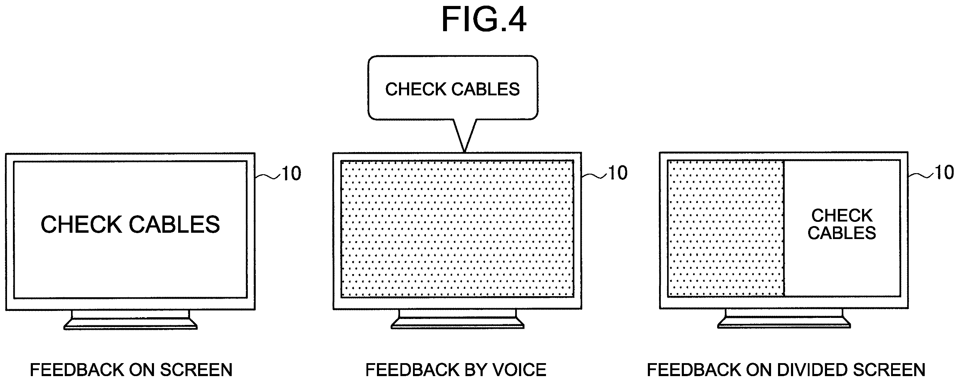

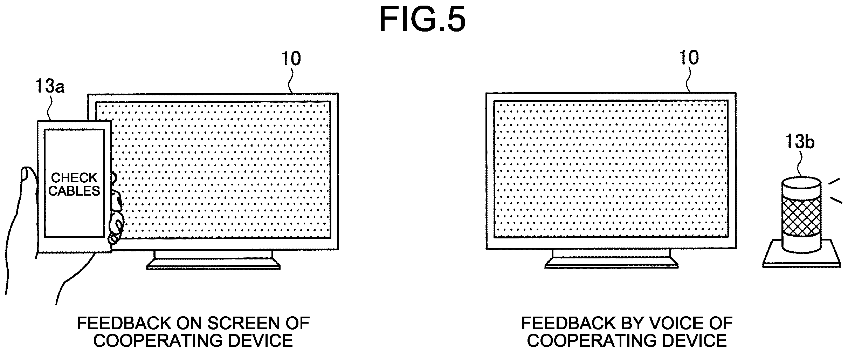

FIG. 4 and FIG. 5 illustrate examples of output of a response by the agent with respect to an inquiry about a device according to the present embodiment. In the examples illustrated in FIG. 4 and FIG. 5, a specific example of output in a case where, when the agent terminal 10 is a television apparatus for example, the user receives answer information, such as "check cables", (from FAQ or the operator) as a response to a voice of "a screen does not work" or the like is illustrated.

For example, as illustrated on the left side in FIG. 4, the response may be displayed, as text data, on the screen of the agent terminal 10 (television apparatus), or as illustrated in the center in FIG. 4, the response may be output by voice (agent voice).

Furthermore, for example, if there is a problem with the screen of the television apparatus, as illustrated on the right side in FIG. 4, the response may be displayed on a part of the screen of the television apparatus (for example, a half region) so that it is possible to check whether a problematic phenomenon is changed by an action of the user.

Moreover, as illustrated on the left side in FIG. 5, the response may be displayed on a screen of a device 13a (for example, a smartphone) that cooperates with the agent terminal 10. Furthermore, as illustrated on the right side in FIG. 5, the response may be output by voice from a device 13b (for example, a smart speaker) that cooperates with the agent terminal 10. The cooperating devices 13 may be products made by different manufacturers from that of the agent terminal 10.

Moreover, a selection of various ways of a response (feedback) as described above may be personalized by using machine learning or the like such that a more easily soluble response or a response that is less stressful for the user is provided. Therefore, in the present system, it may be possible to accumulate a content of an inquiry, answer information, and a response method, as history information in the agent terminal 10 or the answering server 20 in association with the user.

### 4. Operation process

Operation processes of the information processing system according to the present embodiment will be described below.

### 4-1. First operation process: problem with agent terminal 10 is solved by itself

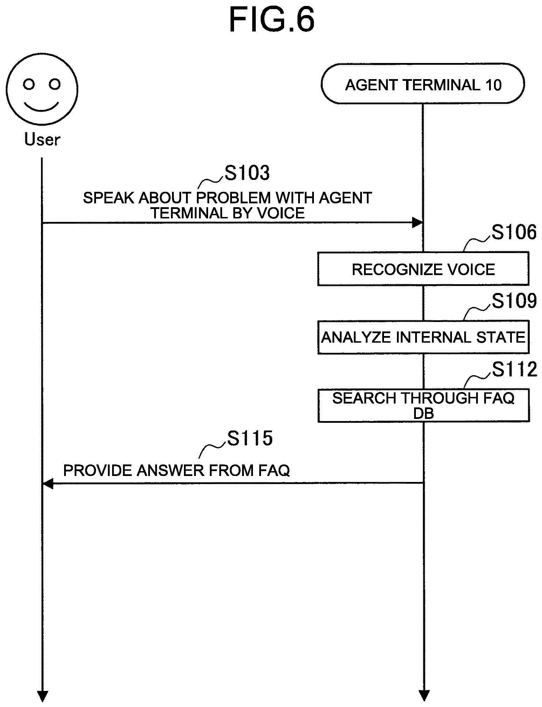

FIG. 6 is a flowchart illustrating an example of a flow of a first operation process of the information processing system according to the present embodiment.

As illustrated in FIG. 6, first, if the user speaks about a problem with the agent terminal 10 by voice (Step S103), the agent terminal 10 causes the voice recognition unit 101 to recognize the voice (Step S106), and extracts inquiry information on the target device (in this example, the agent terminal 10). For example, inquiry information indicating that a screen of the television apparatus (the agent terminal 10) does not work is extracted from a spoken voice of "a screen of a television does not work!" or the like.

Subsequently, because the inquiry target device is the agent terminal 10 itself, the agent terminal 10 causes the state analysis unit 102 to analyze the internal state (Step S109).

Then, the response processing unit 103 of the agent terminal 10 acquires a response by searching through the FAQ DB 150 (Step S112). For example, the response processing unit 103 acquires an answer (for example, "check an HDMI cable" or the like) that is prepared in advance in the FAQ DB 150, on the basis of the content of the inquiry of "a screen of a television does not work" and the internal state (for example, a High-definition Multimedia Interface (HDMI) (registered trademark) cable is not connected).

Subsequently, the response processing unit 103 of the agent terminal 10 notifies the user of the acquired answer (Step S115). Specifically, the response processing unit 103 may output the response by voice from the speaker 130 or output the response by display from the display unit 140.

### 4-2. Second operation process: inquiry about problem with agent terminal 10 is made to server

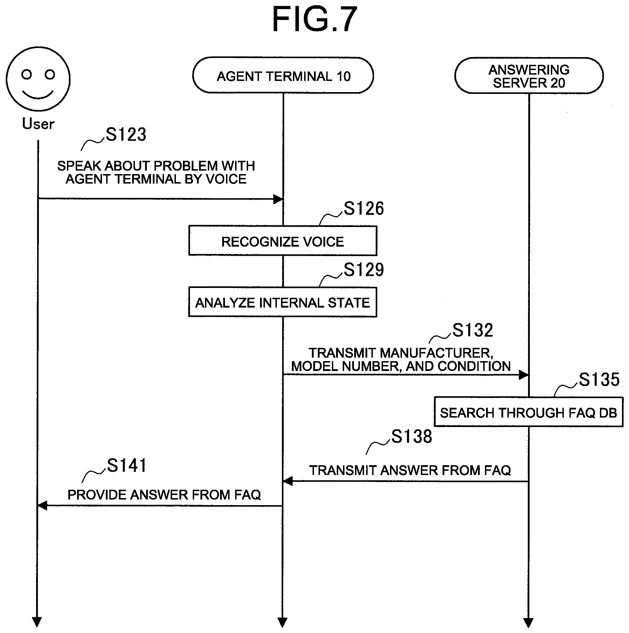

FIG. 7 is a flowchart illustrating an example of a flow of a second operation process of the information processing system according to the present embodiment.

In the second operation process, a case will be described in which the agent terminal 10 does not include the FAQ DB 150 or the agent terminal 10 includes the FAQ DB 150 but is not able to solve a problem (an answer is not detected), and an inquiry is made to the answering server 20.

At Step S123 to S129 illustrated in FIG. 7, similarly to Step S103 to S109 illustrated in the first operation process, the agent terminal 10 recognizes own problem in accordance with a voice spoken by the user.

Subsequently, the agent terminal 10 transmits, as the inquiry information, identification information, such as a manufacturer and a model number, on the target device (in this example, the agent terminal 10) and a condition (state information) to the answering server 20 and requests an answer (Step S132).

Then, the answering server 20 acquires an answer by searching through the FAQ DB 220 (Step S135), and transmits the answer to the agent terminal 10 (Step S138).

Thereafter, the agent terminal 10 notifies the user of the answer acquired from the answering server 20 (Step S141).

### 4-3. Third operation process: problem with agent terminal 10 is voluntarily reported

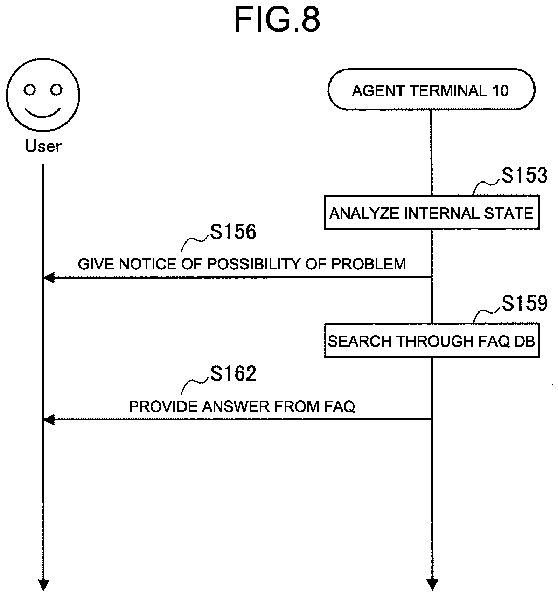

FIG. 8 is a flowchart illustrating an example of a flow of a third operation process of the information processing system according to the present embodiment.

In the third operation process, a case will be described in which the agent terminal 10 voluntarily detects own problem and reports the problem regardless of a spoken voice of the user.

As illustrated in FIG. 8, the agent terminal 10 regularly or irregularly analyzes the internal state (Step S153), and notifies the user of a possibility of a problem (a possibility that a problem has occurred) (Step S156).

Subsequently, the agent terminal 10 searches through the FAQ DB 150 (Step S159), and notifies the user of an answer (Step S162).

### 4-4. Fourth operation process: inquiry about problem with agent terminal 10 is voluntarily made to server

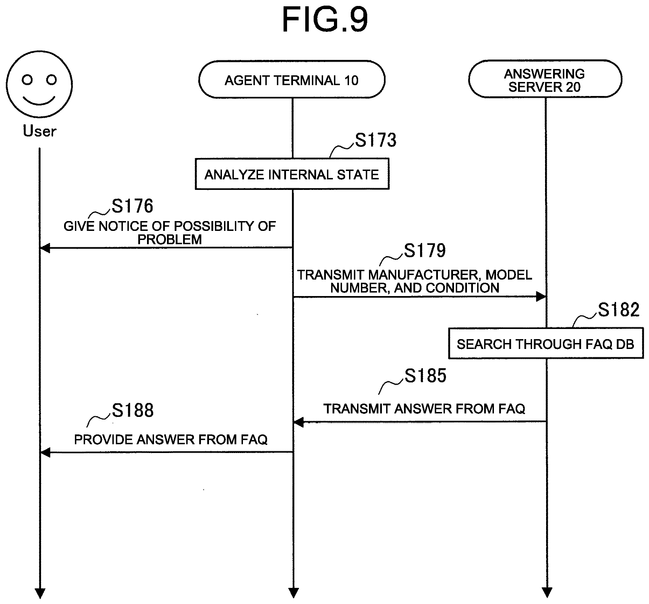

FIG. 9 is a flowchart illustrating an example of a flow of a fourth operation process of the information processing system according to the present embodiment.

In the fourth operation process, a case will be described in which the agent terminal 10 has voluntarily detected own problem and the agent terminal 10 does not include the FAQ DB 150 or the agent terminal 10 includes the FAQ DB 150 but is not able to solve the problem (not able to detect an answer), and therefore, the agent terminal 10 makes an inquiry to the answering server 20.

As illustrated in FIG. 9, the agent terminal 10 analyzes the internal state (Step S173), notifies the user of a possibility of a problem (Step S176), transmits, as the inquiry information, identification information, such as a manufacturer and a model number, on the target device (in this example, the agent terminal 10) and a condition (state information) to the answering server 20, and requests an answer (Step S179).

Subsequently, the answering server 20 acquires an answer by searching through the FAQ DB 220 (Step S182), and transmits the answer to the agent terminal 10 (Step S185).

Then, the agent terminal 10 notifies the user of the answer acquired from the answering server 20 (Step S188).

### 4-5. Fifth operation process: agent terminal 10 solves problem with different device 11

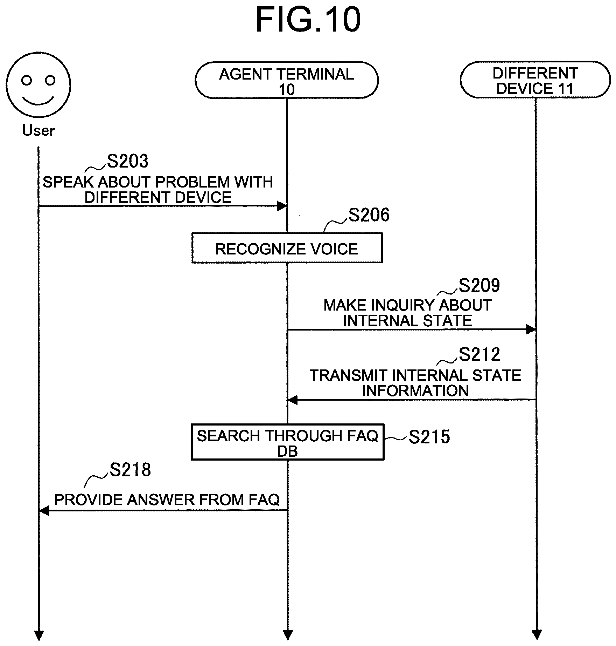

FIG. 10 is a flowchart illustrating an example of a flow of a fifth operation process of the information processing system according to the present embodiment.

In the fifth operation process, a case will be described in which the agent terminal 10 solves a problem with the different device 11 in accordance with a spoken voice of the user.

As illustrated in FIG. 10, first, if the user speaks about a problem with the different device 11 by voice (Step S203), the agent terminal 10 causes the voice recognition unit 101 to recognize the voice (Step S206), and extracts inquiry information on the target device (in this example, the different device 11). For example, inquiry information indicating that an operation panel of a "refrigerator" that is a different device, instead of the agent terminal 10 (for example, a television apparatus, a smart speaker, or the like) that is equipped with the agent function, is extracted from a spoken voice of "an operation panel of a refrigerator is not displayed!" or the like.

Subsequently, because the inquiry target device is the different device 11, the agent terminal 10 makes an inquiry about an internal state to the different device 11 (Step S209).

Then, the different device 11 collects internal state information and transmits the internal state information to the agent terminal 10 (Step S212). Explanation will be given based on the assumption that when the different device 11 is a product made by the same manufacturer as that of the agent terminal 10, it is highly likely that more specific information can be obtained (transmission of information is permitted in advance for cooperation of a product of the same manufacturer, or the like), and, when the different device 11 is a product of a different manufacturer (cooperation with a product made by a different manufacturer), it is possible to obtain a certain degree of information (for example, "a door of a refrigerator is not closed" or the like). Furthermore, when the internal state information is transmitted, identification information (a name of a manufacturer, a model number, or the like) on the different device 11 may be transmitted simultaneously.

Then, the agent terminal 10 searches through the FAQ DB 150 on the basis of the state information, and acquires an answer (for example, "please open the door of the refrigerator once and then close the door" or the like) (Step S215). Meanwhile, the different device 11 may be a product of a different manufacturer. It is assumed that, basically, inquires and answers (manuals) that are assumed in advance for products made by the same manufacturer as the agent terminal 10 are registered in the FAQ DB 150; however, in some cases, it may be assumed that answer information on a certain product, which is made by a different manufacturer and for which cooperation is recommended in advance, is registered, for example.

Thereafter, the agent terminal 10 notifies the user of the acquired answer (Step S218).

### 4-6. Sixth operation process: agent terminal 10 makes inquiry about problem with different device 11 to server

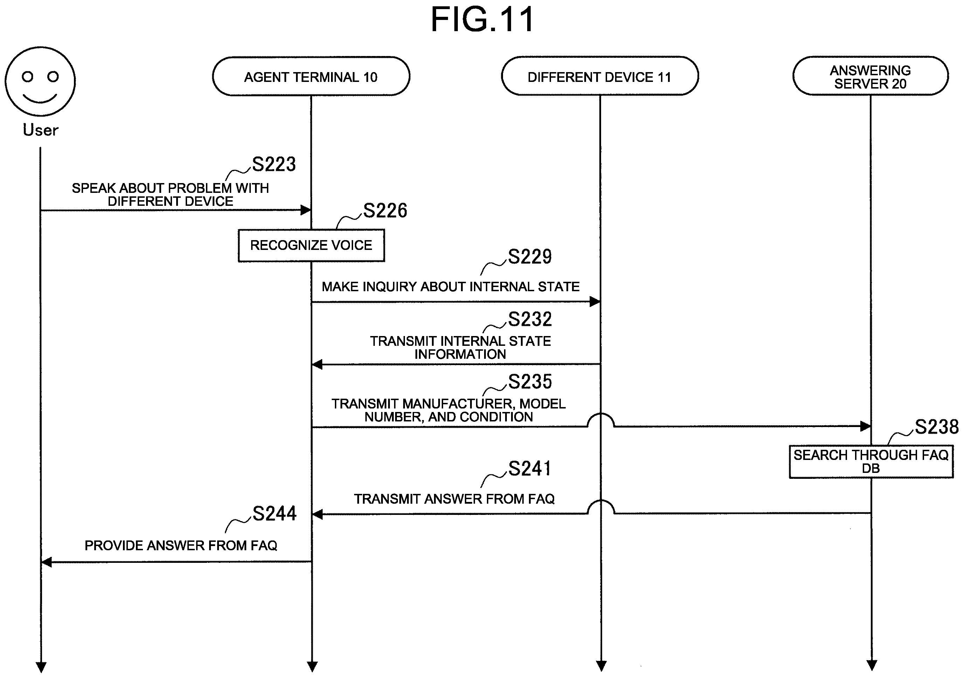

FIG. 11 is a flowchart illustrating an example of a flow of a sixth operation process of the information processing system according to the present embodiment.

In the sixth operation process, a case will be described in which the agent terminal 10 does not include the FAQ DB 150 or the agent terminal 10 includes the FAQ DB 150 but is not able to solve a problem (not able to detect an answer), and therefore, the agent terminal 10 makes an inquiry to the answering server 20.

At Step S223 to S232 illustrated in FIG. 11, similarly to Step S203 to S212 illustrated in the fifth operation process, the agent terminal 10 recognizes a problem with the different device 11 in accordance with a voice spoken by the user.

Subsequently, the agent terminal 10 transmits, as the inquiry information, identification information, such as a manufacturer and a model number, on the target device (in this example, the different device 11) and a condition (state information) to the answering server 20 and requests an answer (Step S235).

Then, the answering server 20 acquires an answer by searching through the FAQ DB 220 (Step S238), and transmits the answer to the agent terminal 10 (Step S241).

Thereafter, the agent terminal 10 notifies the user of the answer acquired from the answering server 20 (Step S244).

### 4-7. Seventh operation process: agent terminal 10 recognizes problem with different device 11 and makes inquiry to server

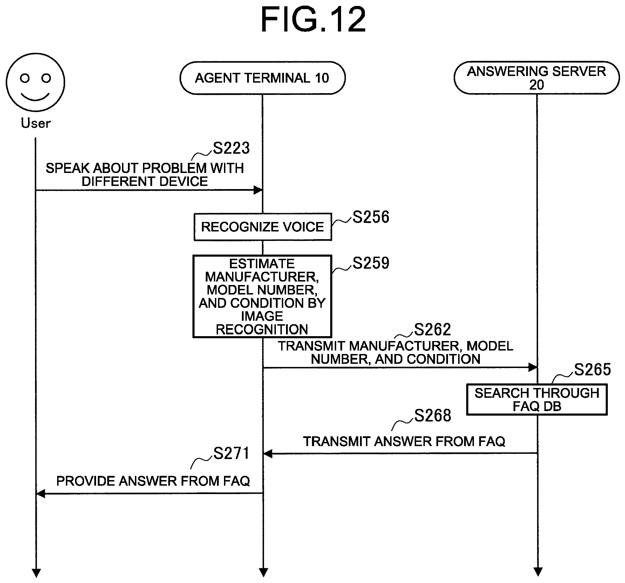

FIG. 12 is a flowchart illustrating an example of a flow of a seventh operation process of the information processing system according to the present embodiment.

In the seventh operation process, a case will be described in which the agent terminal 10 is not able to communicably connect to the different device 11 and is not able to acquire the state information, but recognizes the identification information and the state information on the different device 11 by capturing an image of the different device 11.

As illustrated in FIG. 12, first, if the user speaks about a problem with the different device 11 by voice (Step S253), the agent terminal 10 causes the voice recognition unit 101 to recognizes the voice (Step S256), and extracts inquiry information on the target device (in this example, the different device 11).

Subsequently, if the agent terminal 10 is not able to communicably connect to the target device, the agent terminal 10 causes the imaging unit 160 to capture an image of the target device, recognizes the captured image, and estimates identification information, such as a manufacturer and a model number, on the different device 11 or a condition that can be detected from an external appearance (Step S259). Meanwhile, the agent terminal 10 may further estimate a condition of the target device from the voice information. For example, it is assumed that the agent terminal 10 is a television apparatus and is able to capture an image of the different device 11 that is located nearby. The image of the different device 11 may be captured by the user. Further, the manufacturer, the model number, or the like may be identified by using machine learning or the like. Accordingly, for example, even if the image of the target different device 11 is captured from a lateral side or from an angle, it is possible to recognize the manufacturer or the model number. Meanwhile, the agent terminal 10 may acquire the identification information on the target device by making an inquiry of "do you know a manufacture or a model number?" or the like to the user.

Subsequently, the agent terminal 10 transmits, as the inquiry information, the estimated identification information, such as the manufacturer or the model number, on the target device (in this example, the different device 11) and the estimated condition (state information) to the answering server 20 and requests an answer (Step S262).

Then, the answering server 20 acquires an answer by searching through the FAQ DB 220 (Step S265), and transmits the answer to the agent terminal 10 (Step S268).

Thereafter, the agent terminal 10 notifies the user of the answer acquired from the answering server 20 (Step S271).

### 4-8. Eighth operation process: inquiry about problem with different device 11 is made to call center

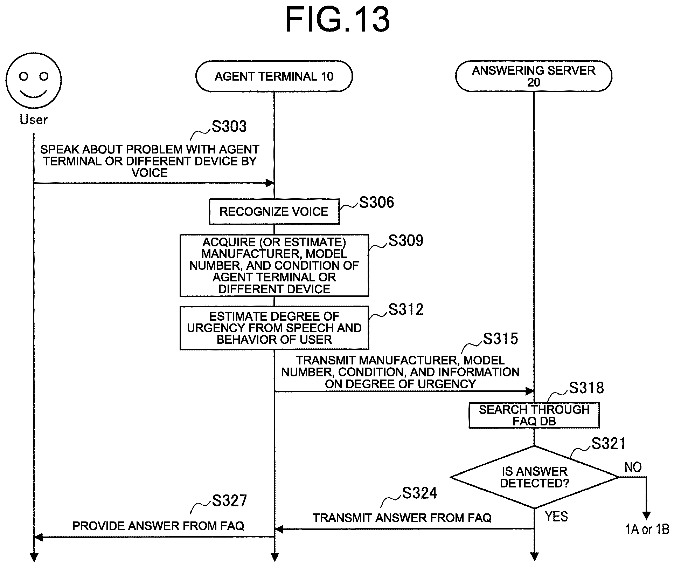

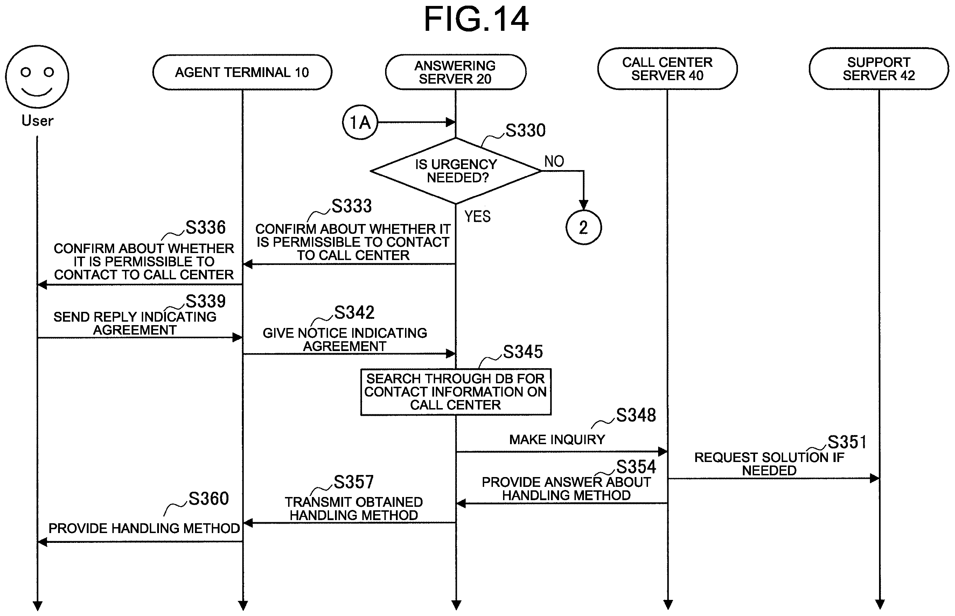

FIG. 13 and FIG. 14 are flowcharts illustrating an example of a flow of an eighth operation process of the information processing system according to the present embodiment.

In the eighth operation process, a case will be described in which when an answer is not detected from the FAQ DB 220, an inquiry is made to the call center (the call center server 40). The target device may be the agent terminal 10 or the different device 11.

As illustrated in FIG. 13, first, if the user speaks about a problem with the agent terminal 10 or the different device 11 by voice (Step S303), the agent terminal 10 performs voice recognition (Step S306), and acquires a manufacturer, a model number, a condition, or the like of the agent terminal 10 or the different device 11 (or perform estimation by image recognition as described above) (Step S309).

Subsequently, the degree-of-urgency estimation unit 105 estimates a degree of urgency from a speech and a behavior of the user (Step S312). Meanwhile, in the present flow, the degree of urgency is estimated by the agent terminal 10, but embodiments are not limited to this example, and it may be possible to transmit information for estimating the degree of urgency to the answering server 20 and cause the answering server 20 to estimate the degree of urgency.

Then, the agent terminal 10 transmits, as the inquiry information, the identification information, such as the manufacturer or the model number, the condition (state information), and information on the degree of urgency to the answering server 20 (Step S315).

Subsequently, the answering server 20 searches through the FAQ DB 220 (Step S318), and if an answer is detected (Step S321/Yes), the answering server 20 transmits the answer to the agent terminal 10 (Step S324).

Then, the agent terminal 10 notifies the user of the answer acquired from the answering server 20 (Step S327) .

In contrast, if an answer is not detected (Step S321/No), as illustrated in FIG. 14, it is determined whether the inquiry is urgent (Step S330).

Subsequently, if the inquiry is urgent (Step S330/Yes), the answering server 20 confirms, via the agent terminal 10, with the user about whether it is permissible to contact to the call center (Step S333 and Step S336). For example, the agent terminal 10 outputs an agent voice of "may I contact to the call center?" or the like.

Then, if the user agrees with the contact to the call center (Step S339 and Step S342), the answering server 20 searches through the contact information DB 230 for a contact information (a phone number or the like) of the call center corresponding to the identification information on the target device (Step S345).

Subsequently, the answering server 20 makes an inquiry about the problem with the target device to the call center server 40 (for example, a proxy phone call is made by the agent voice) (Step S348).

Then, the call center server 40 may request the support server 42 to support a solution if needed (specifically, on the basis of operation performed by an operator who operates an operator terminal connected to the call center server 40) (Step S351).

Subsequently, the call center server 40 provides an answer about a handling method (a solution to the problem or the like) to the answering server 20 (Step S354). If the inquiry to the call center server 40 is made by the proxy phone call (voice conversation), the answer may be a voice obtained from the operator. Alternatively, text data of the voice may be provided.

Then, the answering server 20 transmits the handling method (answer) obtained from the call center server 40 to the agent terminal 10.

Thereafter, the agent terminal 10 notifies the user of the answer acquired from the answering server 20 (Step S244).

Meanwhile, if the request to support the solution is made at Step S351 as described above, the support may provide an answer to the operator, the support may directly make a phone call to the user, or the support may visit the user for repair after making confirmation with the user.

Furthermore, as in the processes at Steps S333 to S342 as described above, it may be possible to confirm with the user about whether it is permissible to contact to the call center in each case, it may be possible for the user to set permissibility of contact to the call center in advance, or it may be possible to perform determination on the basis of a learning history of confirmation about permissibility of contact to the call center.

### 4-9. Ninth operation process: log information on problem is transmitted to support

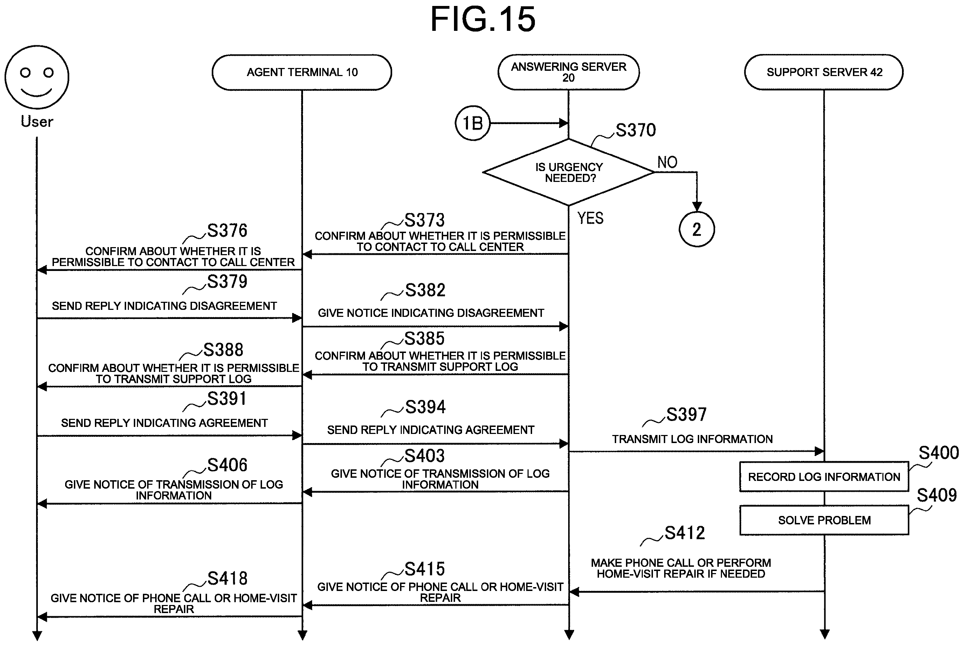

FIG. 15 is a flowchart illustrating an example of a flow of a ninth operation process of the information processing system according to the present embodiment. The target device may be the agent terminal 10 or the different device 11.

In the ninth operation process, a case will be described in which an inquiry is urgent, contact to the call center is rejected by the user, and transmission of a support log is permitted.

The operation process illustrated in FIG. 15 is a process that is performed when, at Step S321 illustrated in FIG. 13, an answer is not detected in the FAQ DB 220 of the answering server 20 (Step S321/No).

If the inquiry is urgent (Step S370/Yes), the answering server 20 confirms the user about whether it is permissible to contact to the call center (Step S373 to Step S376).

Subsequently, if the user does not agree with the contact to the call center (Step S379 to Step S382), the answering server 20 confirms with the user about whether it is permissible to transmit a support log (Step S385 to Step S388).

Then, if the user agrees with the transmission of the support log (Step S391 to Step S394), the answering server 20 transmits the log information including the manufacturer, the model number, the condition, and the like to the support server 42 (Step S397). The log information may include the user emotion information. The support server 42 records therein the log information (Step S400).

Subsequently, the answering server 20 notifies the user that the log information is transmitted, via the agent terminal 10 (Step S403 and Step S406). For example, the agent terminal 10 outputs an agent voice of "a request to a solution is made by transmitting the log information to the support, and details will be sent to a registered e-mail address" or the like.

Then, if the support server 42 solves the problem (Step S409), a phone call is made to the user, a notice indicating that a home-visit repair is to be performed is given, or the like if needed (Step S412 to S418).

4-10. Tenth operation process: feedback on problem is given to developer

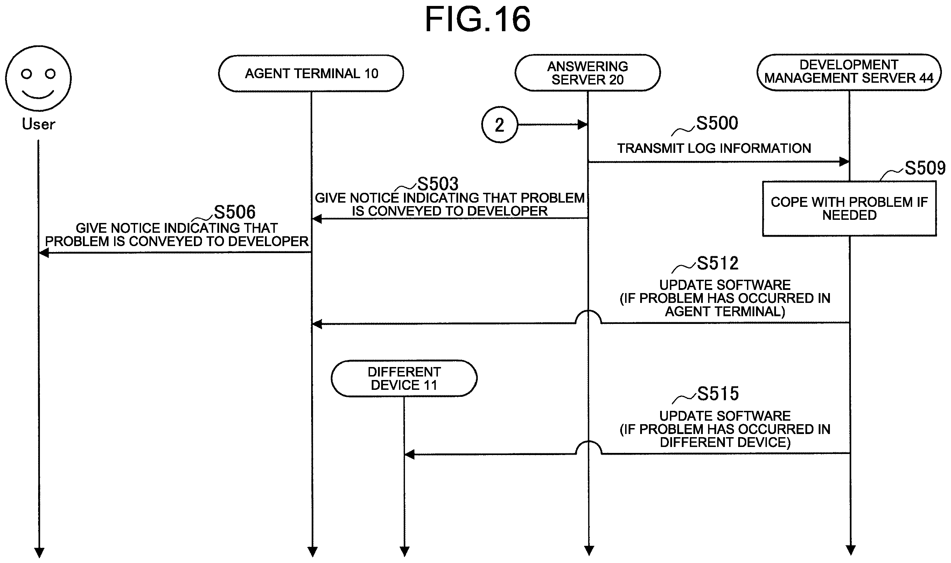

FIG. 16 is a flowchart illustrating an example of a flow of a tenth operation process of the information processing system according to the present embodiment. The target device may be the agent terminal 10 or the different device 11.

In the tenth operation process, a case will be described in which a problem, such as a small complaint or a problem that is not immediately soluble, is fed back to a developer when an inquiry is not urgent.

The operation process illustrated in FIG. 16 is a process that is performed when, at Step S370 illustrated in FIG. 15, the inquiry is determined as not being urgent (Step S370/No).

If the inquiry is not urgent (Step S370/No), the answering server 20 transmits the log information including the manufacturer, the model number, the condition, a complaint from the user, and the like to the development management server 44 (Step S500).

Subsequently, the answering server 20 notifies the user that the problem is conveyed to the developer, via the agent terminal 10 (Steps S503 to S506). For example, the agent terminal 10 outputs an agent voice of ""an icon is not easily understandable" is transmitted together with the condition to the developer" or the like.

Then, the support server 42 copes with the problem if needed (Step S509). It is not necessary to immediately cope with the problem, but the problem may be taken into account at a timing at which software is updated.

Subsequently, software of the target device (the agent terminal 10 or the different device 11) is updated and the problem may be solved (Steps S512 and S515).

Meanwhile, the degree of urgency may be determined after making confirmation with the user using a dialogue agent that functions as the agent terminal 10 (for example, "is it necessary to immediately cope with the problem?" or the like).

Thus, one example of each of the operation processes according to the present embodiment has been described. Meanwhile, the operation process illustrated in each of the flowcharts is one example, and the present disclosure is not limited to this example. For example, the present disclosure is not limited to the sequence of Steps as illustrated in each of the flowcharts. At least some of Steps may be performed in parallel, or may be performed in a reverse order. Furthermore, it is not necessary to perform all of the processes illustrated in each of the flowcharts.

### 5. Modification

### 5-1. Direct inquiry from agent terminal 10 to call center or the like

The agent terminal 10 may include a database in which a phone number or the like of the call center or contact information corresponding to a manufacturer or a product is accumulated, or may acquire the contact information from a cloud, and may make a proxy phone call to the call center, make a request for repair to the support server 42, or transmit the log information to the development management server 44 (without via the answering server 20).

5-2. System configuration example

A system configuration example of the information processing system according to the present embodiment will be described using several examples.

5-2-1. Client-server type system

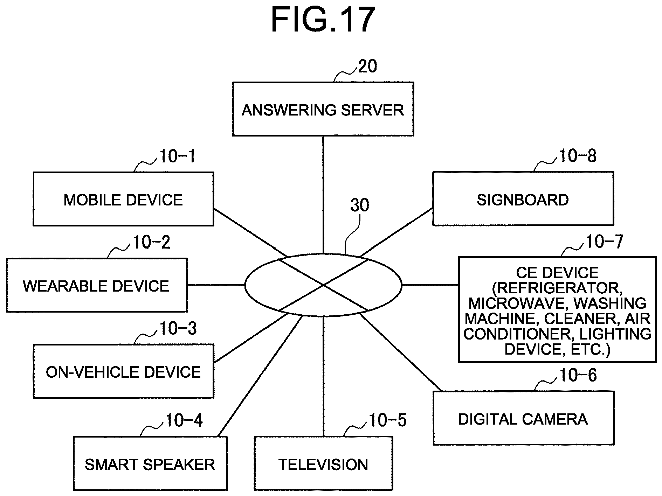

FIG. 17 is a diagram illustrating a configuration example of a client-server type system as a system configuration example according to one embodiment of the present disclosure.

In the example illustrated in the drawing, the plurality of agent terminals 10 are present. Each of the agent terminals 10 is able to perform a dialogue with the user, and when a request to solve a problem is to be made in a dialogue with a certain one of the agent terminals 10, a different one of the agent terminals 10 serves as the different device 11 as described above for the certain agent terminal 10.

As illustrated in the drawing, the agent terminal 10 includes, for example, a mobile device 10-1, such as a smartphone, a tablet, or a notebook personal computer (PC), a wearable device 10-2, such as an eye-ware or a contact lens type terminal, a watch type terminal, a bracelet type terminal, a ring type terminal, a headset, a clothes mounting type or clothes integrated type terminal, a shoes mounting type or shoes integrated type terminal, or a necklace type terminal, an on-vehicle device 10-3, such as a car navigation system or a rear seat entertainment system, a smart speaker 10-4, a television 10-5, a digital camera 10-6, a consumer electronics (CE) device 10-7, such as a refrigerator, a microwave, a washing machine, a cleaner, an air conditioner, a lighting device, a recorder, a gaming device, or a desktop PC, a robot device, a device including a sensor that is installed together with an equipment, or a digital signboard (digital signage) 10-8 that is installed on the street. The agent terminals 10 communicate with the answering server 20 via the network.

The devices as described above may individually perform cooperative operation between the devices, or it may be possible to construct a system in which all of the devices can perform cooperative operation.

The example illustrated in FIG. 17 is illustrated so that an example in which the information processing system of the present disclosure is implemented in the client-server system can easily be understood, and the present system is not limited to the client-server system as described above. Further, the example of the agent terminals 10 is not limited to the example as illustrated in FIG. 17, and a different type of a terminal device may be included.

### 5-2-2. Distributed system

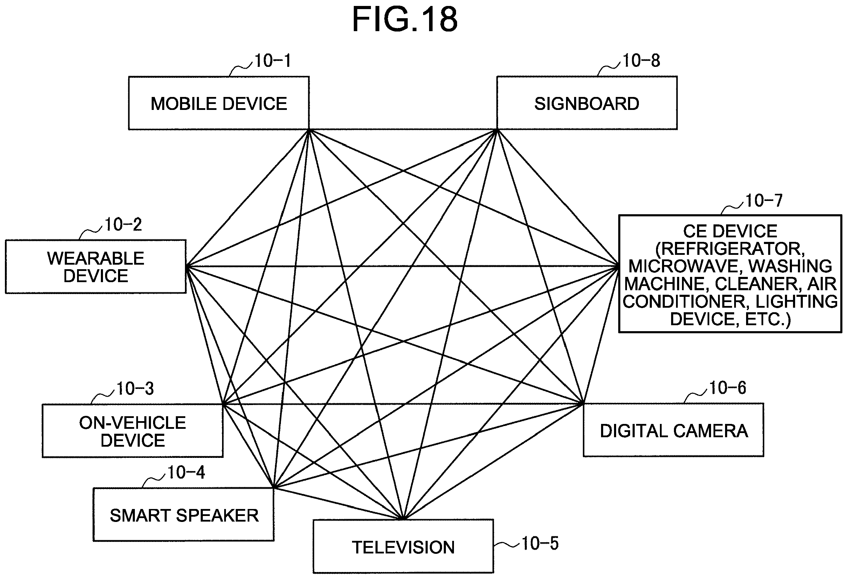

FIG. 18 is a diagram for explaining a distributed system as a system configuration example according to one embodiment of the present disclosure. In the example illustrated in the drawing, the agent terminals 10 serve as nodes and the agent terminals 10 are connected to one another via a network.

In the distributed system as illustrated in FIG. 18, the devices are able to individually perform cooperative operation, manage data in a distributed manner, or perform processes in a distributed manner. With this configuration, it is possible to reduce a processing load, improve real time performance (improvement of a response time and a processing speed), and ensure security.

Furthermore, the distributed system is also able to perform machine learning in a distributed cooperative manner, and is able to process a large amount of data.

Moreover, in the distributed system as illustrated in FIG. 18, a server used in a centralized system is not needed, and it is possible to mutually monitor data and ensure credibility of the data. Specifically, for example, it is possible to share transaction information (ledger) with all of participants (all of the agent terminals 10) and strictly maintain validity (what is called a blockchain). In the blockchain, it is substantially difficult to manipulate all of ledgers of all of the participants, so that it is more reliably ensure the credibility. Furthermore, in the blockchain, if data included in a certain past block is to be manipulated, it is necessary to re-calculate all of hash values included in blocks that follow the certain block, so that a processing load becomes huge and such a process is substantially impossible; therefore, it is possible to more reliably ensure the credibility.

Moreover, in the blockchain, all of the participants share the transaction information (distributed database), and writing to the distributed database is performed based on a specific agreement, so that it is possible to prevent a fraud from being performed by a specific participant and it is possible to maintain fairness.

### 5-2-3. System configuration including intermediate server

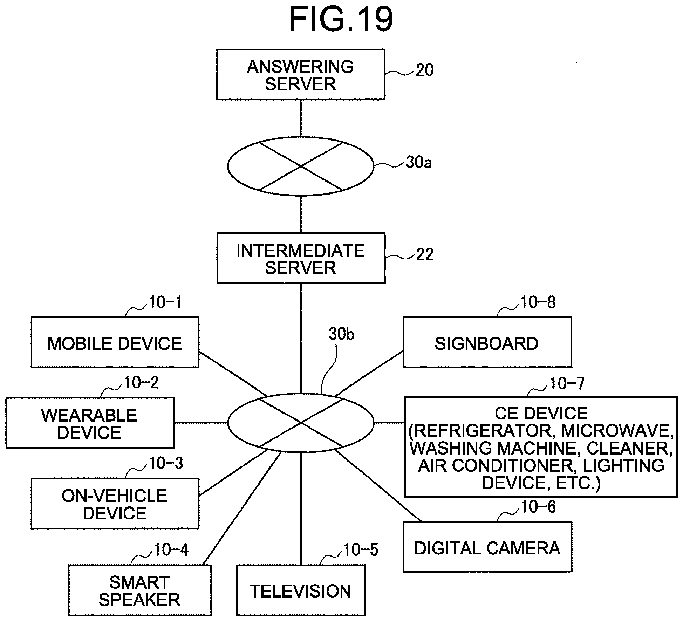

FIG. 19 is a diagram illustrating an example of a system including an intermediate server 22 as a system configuration example according to one embodiment of the present disclosure.

Examples of the agent terminal 10 may include the mobile device 10-1, the wearable device 10-2, the on-vehicle device 10-3, the smart speaker 10-4, the television 10-5, the digital camera 10-6, the CE device 10-7, the robot device, and the signboard 10-8. The agent terminals 10 as described above communicably connect to the intermediate server 22 via a network.

The intermediate server 22 communicably connects to the answering server 20 via the network.

The intermediate server 22 may simply relay transmission and reception of data between the agent terminal 10 and the answering server 20, or may perform at least a part of the processes that are performed by the agent terminal 10 or the answering server 20 in the above-described embodiment.

### 5-2-4. System configuration example including terminal device that functions as host

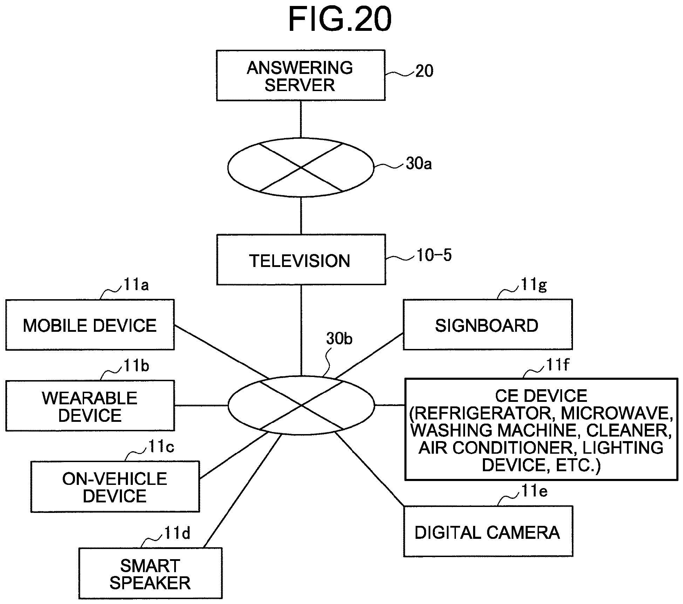

FIG. 20 is a diagram for explaining a system including a terminal device that functions as a host as a system configuration example according to one embodiment of the present disclosure.

In the system configuration examples illustrated in FIG. 17 to FIG. 19, all of the terminal devices can function as the agent terminal 10 as described above; however, in the system configuration example illustrated in FIG. 20, a single terminal device functions as a host. In other words, it is assumed that the single terminal device performs data communication with the answering server 20, and performs data communication with a different terminal device (corresponding to the different device 11). The system configuration example illustrated in FIG. 20 is a more specific example of the system configuration example as illustrated in FIG. 1.

In the example illustrated in the drawing, the different device 11 may include, for example, a mobile device 11a, a wearable device 11b, an on-vehicle device 11c, a smart speaker 11d, a digital camera 11e, a robot device, a device including a sensor that is installed together with an equipment, a CE device 11f, and a signboard 11g. The different devices 11 (terminal devices) as described above communicate with the television 10-5 (the agent terminal 10) via a network, such as Bluetooth (registered trademark) or Wi-Fi.

Furthermore, in FIG. 20, the television 10-5 is illustrated as one example of the terminal device that functions as the host.

Meanwhile, the terminal device (the agent terminal 10) that functions as the host is not limited to the television 10-5 as in the example illustrated in the drawing, but various terminal devices that have appropriate communication functions and processing functions may function as hosts. Furthermore, the mobile device 11a, the wearable device 11b, the on-vehicle device 11c, the smart speaker 11d, the digital camera 11e, the CE device 11f, and the signboard 11g that are illustrated as examples of the terminal device in the drawing do not eliminate, from the examples as described above, a terminal device other than the devices as described above, but are mere examples of a typical terminal device that may be adopted as the different device 11 in a case where the television 10-5 serves as the agent terminal 10.

### 6. Conclusion

While the preferred embodiments of the present disclosure have been described in detail above with reference to the accompanying drawings, the present technology is not limited to the examples as described above. It is obvious that a person skilled in the technical field of the present disclosure may conceive various alternations and modifications within the scope of the appended claims, and it should be understood that they will naturally come under the technical scope of the present disclosure.

According to the present embodiment, when it is difficult to obtain an answer from an FAQ, the agent contacts to the call center by making a proxy phone call or the like, so that it is possible to omit time and effort of the user and prevent frustration. Furthermore, when a proxy phone call is to be made, it is possible to solve a problem by using an existing equipment of the call center.

Moreover, it is not always needed to perform cooperation between devices that are made by the same manufacturer, but even in a situation in which a product made by a different manufacture is controlled in cooperation with the product made by the different manufacture, it is possible to appropriately cope with a complaint, a defect, a problem, and the like with respect to the product made by the different manufacturer, so that it is possible to improve usability.

Furthermore, a complaint and a problem are extracted from a muttering of the user ("this icon is confusing" or the like) or a voice dialogue with the agent ("a UI of a menu screen of a television is awkward" or the like), so that a psychological or operational obstacle for conveying the complaint or the problem (to make a phone call to the call center by the user by him/herself, to input information in an input form on a Web site, or the like) is reduced, so that it is possible to collect a large amount of productive feedback to a developer.

Moreover, it is possible to generate a computer program that causes hardware, such as the CPU, the ROM, the RAM, and the like incorporated in the agent terminal 10, the different device 11, the answering server 20, the call center server 40, the support server 42, or the development management server 44 as described above to implement the functions of the agent terminal 10, the different device 11, the answering server 20, the call center server 40, the support server 42, or the development management server 44. Furthermore, a computer readable storage medium that stores therein the computer program is also provided.

Moreover, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing terminal comprising:
   a control unit that performs
   a process of transmitting inquiry information on a specific device to a server on the basis of one of a spoken content of a user and a state of the specific device that is voluntarily collected,
   a process of outputting answer information when receiving, from the server, the answer information that is based on an answer database in which answer information prepared in advance is registered, and
   a process of making an inquiry about the inquiry information to an operator if the answer information is not detected in the server.
(2) The information processing terminal according to (1), wherein the control unit performs a process of notifying a user that the answer information is not detected in the server and that a proxy phone call to the operator is to be made.
(3) The information processing terminal according to (2), wherein the control unit performs a process of notifying the server that a proxy phone call to the operator is permitted if a permission to make a proxy phone call to the operator is obtained from the user.
(4) The information processing terminal according to any one of (1) to (3), wherein the control unit performs a process of
   acquiring state information on the specific device and identification information on the specific device, and
   transmitting the state information and the identification information to the server by including the state information and the identification information in the inquiry information.
(5) The information processing terminal according to (4), wherein the identification information includes at least one of a manufacturer and a model number of the apparatus.
(6) The information processing terminal according to (4) or (5), wherein the specific device is one of the information processing terminal and a different device.
(7) The information processing terminal according to any one of (4) to (6), wherein the control unit performs a process of recognizing at least one of the identification information and the state information from a captured image that is obtained by an imaging unit by capturing an image of the specific device.
(8) The information processing terminal according to any one of (1) to (7), wherein the control unit performs a process of outputting answer information that is obtained from the server by making an inquiry to the operator.
(9) An information processing apparatus comprising:
   an answer database in which answer information prepared in advance is registered;
   a contact information database in which contact information is registered; and
   a control unit that performs a process of
      searching for answer information from the answer database on the basis of inquiry information that is transmitted from an information processing terminal, that is about a specific device, and that is based on one of a spoken content of a user and a state of the specific device that is voluntarily collected,
      transmitting retrieved answer information to the information processing terminal, and
      making an inquiry to an operator by referring to the contact information database with respect to the inquiry information if corresponding answer information is absent.
(10) The information processing apparatus according to (9), wherein the control unit
   acquires contact information on the operator from the contact information database on the basis of identification information on the specific device, the identification information being included in inquiry information received from the information processing terminal, and
   makes a proxy phone call to transmit voice information to a destination indicated by the contact information on the operator, the voice information indicating the identification information and state information on the specific device, the identification information and the state information being included in the inquiry information.
(11) The information processing apparatus according to (9) or (10), wherein the control unit performs a process of transmitting answer information based on an answer obtained from the operator to the information processing terminal.
(12) The information processing apparatus according to any one of (9) to (11), wherein
   when determining that urgency is needed on the basis of at least one of a spoken content of the user, user emotion information, and a content of an inquiry that are included in the inquiry information, the control unit makes an inquiry to the operator, and
   when determining that urgency is not needed, the control unit performs a process of transmitting the inquiry information as log information to a development management server.
(13) An information processing method implemented by a processor, the information processing method comprising:
   transmitting inquiry information on a specific device to a server on the basis of one of a spoken content of a user and a state of the specific device that is voluntarily collected;
   outputting answer information when receiving, from the server, the answer information that is based on an answer database in which answer information prepared in advance is registered; and
   making an inquiry about the inquiry information to an operator if the answer information is not detected in the server.
(14) An information processing method implemented by a processor, the information processing method comprising:
   searching for answer information from answer data base in which answer information prepared in advance is registered, on the basis of inquiry information that is transmitted from an information processing terminal, that is about a specific device, and that is based on one of a spoken content of a user and a state of the specific device that is voluntarily collected;
   transmitting retrieved answer information to the information processing terminal; and
   making an inquiry to an operator by referring to a contact information database in which contact information is registered, with respect to the inquiry if corresponding answer information is absent.

### Reference Signs List

- 10: agent terminal

- 100: control unit
- 101: voice recognition unit
- 102: state analysis unit
- 103: response processing unit
- 104: user emotion analysis unit
- 105: degree-of-urgency estimation unit
- 110: communication unit
- 120: microphone
- 130: speaker
- 140: display unit
- 150: FAQ DB
- 160: imaging unit
- 20: answering server
- 200: control unit
- 201: response processing unit
- 202: user emotion analysis unit
- 203: degree-of-urgency estimation unit
- 204: call center inquiry unit
- 205: log information transmission control unit
- 210: communication unit
- 220: FAQ DB
- 230: contact information DB

## Claims

1. An information processing terminal comprising:
a control unit that performs
a process of transmitting inquiry information on a specific device to a server on the basis of one of a spoken content of a user and a state of the specific device that is voluntarily collected,
a process of outputting answer information when receiving, from the server, the answer information that is based on an answer database in which answer information prepared in advance is registered, and
a process of making an inquiry about the inquiry information to an operator if the answer information is not detected in the server.

2. The information processing terminal according to claim 1, wherein the control unit performs a process of notifying a user that the answer information is not detected in the server and that a proxy phone call to the operator is to be made.

3. The information processing terminal according to claim 2, wherein the control unit performs a process of notifying the server that a proxy phone call to the operator is permitted if a permission to make a proxy phone call to the operator is obtained from the user.

4. The information processing terminal according to claim 1, wherein the control unit performs a process of
acquiring state information on the specific device and identification information on the specific device, and
transmitting the state information and the identification information to the server by including the state information and the identification information in the inquiry information.

5. The information processing terminal according to claim 4, wherein the identification information includes at least one of a manufacturer and a model number of the apparatus.

6. The information processing terminal according to claim 4, wherein the specific device is one of the information processing terminal and a different device.

7. The information processing terminal according to claim 4, wherein the control unit performs a process of recognizing at least one of the identification information and the state information from a captured image that is obtained by an imaging unit by capturing an image of the specific device.

8. The information processing terminal according to claim 1, wherein the control unit performs a process of outputting answer information that is obtained from the server by making an inquiry to the operator.

9. An information processing apparatus comprising:
an answer database in which answer information prepared in advance is registered;
a contact information database in which contact information is registered; and
a control unit that performs a process of
searching for answer information from the answer database on the basis of inquiry information that is transmitted from an information processing terminal, that is about a specific device, and that is based on one of a spoken content of a user and a state of the specific device that is voluntarily collected,
transmitting retrieved answer information to the information processing terminal, and
making an inquiry to an operator by referring to the contact information database with respect to the inquiry information if corresponding answer information is absent.

10. The information processing apparatus according to claim 9, wherein the control unit
acquires contact information on the operator from the contact information database on the basis of identification information on the specific device, the identification information being included in inquiry information received from the information processing terminal, and
makes a proxy phone call to transmit voice information to a destination indicated by the contact information on the operator, the voice information indicating the identification information and state information on the specific device, the identification information and the state information being included in the inquiry information.

11. The information processing apparatus according to claim 9, wherein the control unit performs a process of transmitting answer information based on an answer obtained from the operator to the information processing terminal.

12. The information processing apparatus according to claim 9, wherein
when determining that urgency is needed on the basis of at least one of a spoken content of the user, user emotion information, and a content of an inquiry that are included in the inquiry information, the control unit makes an inquiry to the operator, and
when determining that urgency is not needed, the control unit performs a process of transmitting the inquiry information as log information to a development management server.

13. An information processing method implemented by a processor, the information processing method comprising:
transmitting inquiry information on a specific device to a server on the basis of one of a spoken content of a user and a state of the specific device that is voluntarily collected;
outputting answer information when receiving, from the server, the answer information that is based on an answer database in which answer information prepared in advance is registered; and
making an inquiry about the inquiry information to an operator if the answer information is not detected in the server.

14. An information processing method implemented by a processor, the information processing method comprising:
searching for answer information from answer data base in which answer information prepared in advance is registered, on the basis of inquiry information that is transmitted from an information processing terminal, that is about a specific device, and that is based on one of a spoken content of a user and a state of the specific device that is voluntarily collected;
transmitting retrieved answer information to the information processing terminal; and
making an inquiry to an operator by referring to a contact information database in which contact information is registered, with respect to the inquiry if corresponding answer information is absent.
